# EUROPÄISCHE PATENTSCHRIFT

(11) **EP 1 026 839 B1**
(45) Veröffentlichungstag und Bekanntmachung des Hinweises auf die Patenterteilung: **27.04.2005**
(21) Anmeldenummer: 00101473.7
(22) Anmeldetag: 26.01.2000
(51) Int. Cl.: H04B 10/00, H04B 10/20

(54) **Bussystem mit Lichtwellenleiter**
Bus system with optical fibre
Système à bus à fibre optique

(30) Priorität: 05.02.1999 DE 19904861
(43) Veröffentlichungstag der Anmeldung: 09.08.2000
(73) Patentinhaber: Phoenix Contact GmbH & Co. KG, 32825 Blomberg (DE)
(72) Erfinder: Behr, Thorsten, Dipl.-Ing., 32805 Horn-Bad Meinberg (DE)
(74) Vertreter: Elbertzhagen, Otto, Dipl.-Ing.

(56) Entgegenhaltungen:
- DE-A- 4 123 489
- GB-A- 2 177 869
- US-A- 5 859 719

## Beschreibung

Die Erfindung betrifft ein Bussystem mit einer optischen Energiequelle und mit einer Mehr- oder Vielzahl von Busteilnehmern, die zur Übertragung von Daten durch einen Lichtwellenleiter miteinander verbunden sind.

Ein solches Bussystem ist aus dem Dokument DE 41 23 489 C2 bekannt. Ein ähnliches System geht aus dem Dokument US 5,258,868 hervor. Bei der Datenübertragung und bei der Energieübertragung zur Versorgung der Busteilnehmer über den gemeinsamen Lichtwellenleiter sind Probleme zu überwinden, die sich aus den nachstehenden Betrachtungen ergeben.

Die Energieübertragung zwischen Quelle und unterschiedlichen Teilnehmern in einem elektrischen System basiert im Gegensatz zu einem optischen System grundlegend auf der Wechselwirkung zwischen positiven Ladungsträgern (den Atomrümpfen) und negativen Ladungsträgern (den Elektronen). Diese Wechselwirkung äußert sich in einem elektrischen Feld, das eine Kraft auf die elektrisch geladenen Teilchen ausübt.

In einem Stromkreis bildet sich entlang der Leiterbahnen zwischen den beiden Polen einer Quelle ein entsprechendes elektrisches Feld. Die Elektronen als einzige bewegliche Ladungsträger des Leiters werden dabei von diesem elektrischen Feld beschleunigt, d.h. sie nehmen kinetische Energie aus dem elektrischen Feld auf. Durch Stöße mit den Gitteratomen des Leiters stellt sich ein stationärer Zustand in Form einer mittleren konstanten Geschwindigkeit der Elektronen ein, d.h. ein Strom.

Wird der Widerstand, der die Elektronen hemmt, verringert, z.B. indem mehrere Verbraucher parallel zur Quelle geschaltet werden, nehmen insgesamt die Elektronen mehr kinetische Energie auf. Somit bestimmen die Verbraucher die Energiemenge, die der Quelle entzogen wird.

Bei optischen Übertragungen hingegen ist das Licht selber die übertragene Energieform, d.h. es wird nicht Energie durch in Wechselwirkung stehende Teilchen übertragen, sondern es wird das elektromagnetische Feld transportiert und damit letztlich die Energie selbst. Dies ist darauf zurückzuführen, daß, im Teilchenbild gesprochen, Lichtquanten (Photonen) untereinander im Vakuum keine und in Materie nahezu keine Wechselwirkung aufweisen (Maxwell Gleichungen sind für viele Materialien linear, d.h. es gilt das Superpositionsprinzip). Hierbei entstehen Lichtquanten bei ihrer Aussendung durch die optische Energiequelle, die bei der Absorption durch einen Empfänger vernichtet werden. Dabei findet eine Übertragung der Lichtenergie auf die Bewegung von Ladungsträgern statt. Bei der optischen Übertragung besteht somit keine Wechselwirkung zwischen Quelle (Sender) und Verbraucher (Empfänger). D.h. der optische Verbraucher beeinflußt im Gegensatz zum elektrischen Verbraucher die Leistung der optischen Quelle nicht.

Optische Signalübertragungen erfolgen bei bekannten Lichtwellenbussystemen, die eine Stern- oder Ringtopologie aufweisen.

Die Kommunikation in einer Ringstruktur erfolgt durch das Weiterreichen entsprechender Nachrichten von Teilnehmer *n* zu Teilnehmer *n+1*. Der geschlossene Ring ermöglicht die Kommunikation aller Teilnehmer untereinander; ein redundanter paralleler Ring erhöht die Ausfallsicherheit des Systems.

Bei einer Sterntopologie sind alle Teilnehmer direkt über einen Sternkoppler miteinander verbunden. Die direkte Kommunikation einzelner Teilnehmer erfolgt durch entsprechende Schaltungen des Sternkopplers.

In beiden Topologien werden die erforderlichen Lichtwellenleiter ausschließlich zur Signalübertragung genutzt. Die Energieversorgung der Busteilnehmer erfolgt vorwiegend über einen elektrischen Leiter. Ausnahmsweise kann die Übertragung der Energie über einen separaten optischen Leiter, z.B. eine einzelne Faser, vorgenommen werden. Eine vollständige Busteilnehmerankopplung mit einer optischen Energieversorgung erfordert wenigstens drei Lichtwellenleiter- bzw. Faseranschlüsse.

Aus dem Dokument GB 2,177,869 A ist es grundsätzlich bekannt, bei einem optischen Energieübertragungssystem, bei dem bei den Empfängern die optische Energie in elektrische Energie umgewandelt wird, diese elektrische Energie entweder in einem Kondensator oder in einer wiederaufladbaren Batterie zu speichern.

Das Dokument US 5,859,719 beschreibt ein optisches Übertragungssystem, bei dem der Energiestrom vom Datenstrom mittels eines optischen Demultiplexers getrennt wird.

Der Erfindung liegt die Aufgabe zugrunde, ein Bussystem der eingangs genannten Art zu schaffen, bei dem jeder der Busteilnehmer den Datenempfang aus dem Datenstrom und den Energiebedarf aus dem Energiestrom für sich selbst regelt und die Energiebedarfsmenge speichert.

Diese Aufgabe wird bei einem Bussystem gemäß dem Oberbegriff des Patentanspruchs 1 durch die kennzeichnenden Merkmale des Patentanspruchs 1 gelöst.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläuter. Dabei zeigen:
- **Fig. 1**: ein Bussystem bestehend aus Busteilnehmern die über einen Lichtwellenleiter ringförmig miteinander verbunden sind, wobei eine Master-Einheit mit einer Prozeßsteuerung verbunden ist;
- **Fig. 2**: den schematischen Aufbau eines Busteilnehmers, der einen Empfänger, bestehend aus einem O/E-Konverter und aus einem Demodulator, einen Protokollchip und einen Sender, bestehend aus einem Modulator und einem E/O-Konverter, aufweist.

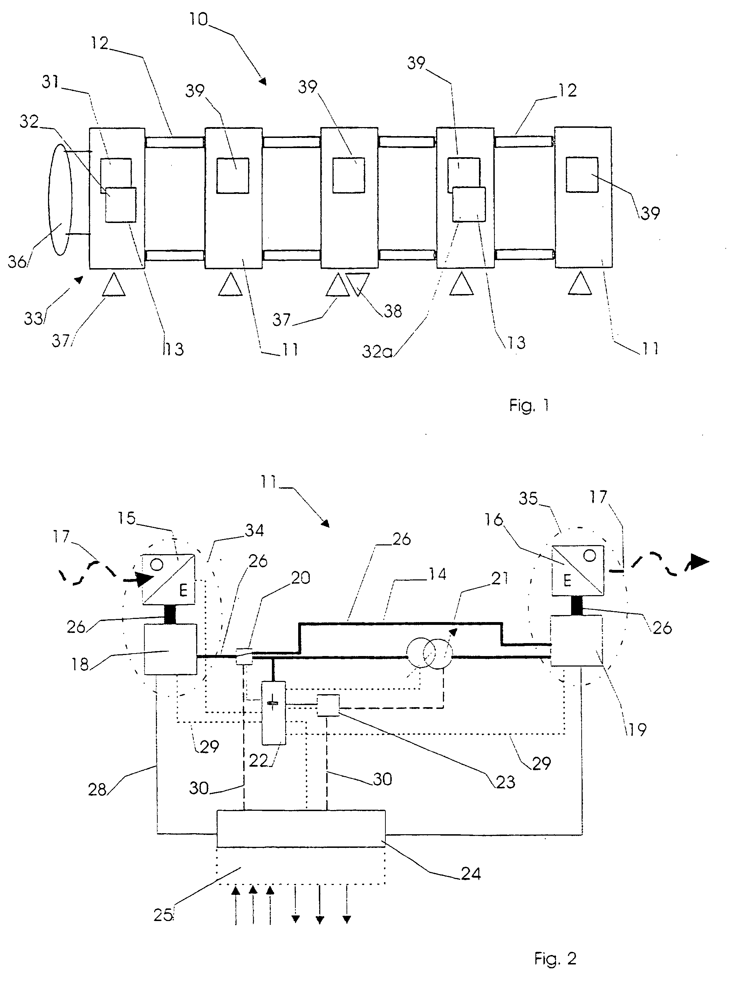

Figur 1 zeigt ein Bussystem 10 mit Busteilnehmern 11, die als Daten-Master 31, Energie-Master 32 und 32a, Daten-Slave 39 bzw. als Master-Einheit 33 ausgebildet sind.

Als optischer Energie-Master 32 und 32a dient eine Lichtquelle mit hoher optischer Ausgangsleistung. Die erforderliche Ausgangsleistung berechnet sich aus der Summe des optischen Leistungsbedarfs aller Teilnehmer und den Übertragungsverlusten. Dem optischen Energiesignal 17 (Fig. 2) wird das optische Datensignal 17 unter Erreichung eines hohen Energiegehaltes, z.B. eines hohen Gleichanteils, zusätzlich aufmoduliert. Bestandteile des optischen Energie-Masters 32 und 32a können aufgrund ihres Aufbaues die unten beschriebenen - nicht dargestellten - Halbleiterlaserelemente sein. Die Einbindung mehrerer Energie-Master 32 und 32a in das Bussystem kann, wie Figur 1 zeigt, ohne Funktionsbeeinträchtigung erfolgen.

Es wird bei den Energie-Mastern 32 zwischen passiven Mastern 32a und aktiven Mastern 32 unterschieden. Die passiven wie auch die aktiven Energie-Master 32 und 32a bilden die Schnittstelle zu einem elektrischen Energieversorgungssystem. Die passiven Energie-Master 32a sind lediglich für die elektrisch/optische Energiekonvertierung zuständig. Die aktiven Energie-Master 32 sind hingegen in Verbindung mit einem Daten-Master 31 in Form einer Master-Einheit 33 aktiv in die Bussteuerung integriert.

In der Ringtopologie in Figur 1 bildet der Daten-Master 31 die Schnittstelle zur Prozeßsteuerung 36 oder zu einem weiteren Bussystem. Die Master-Einheit 33 steuert die Abläufe des Busses wie Daten-, Ident- und Energiezyklen. Als Übertragungsmedium dient ein Lichtwellenleiter 12, der durch geeignete Maßnahmen auch bidirektional für Energie- und Datenübertragung genutzt werden kann. Bei einer Ringstruktur kann auf einen rückführenden Lichtwellenleiter 12 physikalisch verzichtet werden.

Wie Figur 2 zeigt, ist ein O/E-Konverter 15 (optisch/ elektrischer Energiekonverter) Bestandteil eines optischen Empfängers 34. O/E-Konverter ermöglichen die Wandlung optischer Signale in elektrische Ströme. Die Führung von optischer Energie (Licht) durch einen Lichtwellenleiter ermöglicht so eine vollständig potentialfreie Energieversorgung der elektrischen Komponenten.

Im Gegensatz dazu eignen sich als E/O-Konverter 16 (elektrisch/optische Energiekonverter) aufgrund ihrer hohen Energieleistung und Modulationsfähigkeit Halbleiterlaser oder Hochleistungs-LEDs, die vorzugsweise in einem Sender 35 angeordnet sind. Zur Regelung des Lasers ist in den Halbleiterlaserelementen eine Pin-Fotodiode integriert. Das Laserelement ist so aufgebaut, daß ein Teil der Lichtleistung durch die vordere Kantenfläche und ein Teil der Leistung durch die hintere Kantenfläche des Chipelelments austritt. Die nach hinten austretende Leistung wird durch die Fotodiode detektiert und als Regelgröße weiter verarbeitet. Die Trennung des Datenstroms 28 und Energiestroms 27 kann durch eine AC/DC-Entkopplung mit Hilfe eines Demodulators 18 erfolgen, der ebenfalls Bestandteil des Empfängers 34 ist. Die Daten werden entsprechend demoduliert und digital weiterverarbeitet. Der Energiestrom 27, der vorzugsweise als Gleichspannungsanteil ausgebildet ist, wird in einem Energiespeicher 22 zwischengespeichert. Der Energiespeicher 22 ist vorteilhafterweise ein Kondensator, z.B. Goldkondensator mit einigen *F*, der über eine Diode geschaltet ist.

Durch den Innenwiderstand dieses Energiespeichers 22 ist der Energiegehalt kontrollierbar. Nicht erforderliche Energie wird einem Modulator 19 und dem nachgeordneten E/O-Konverter 16 zugeführt, die als Sender 35 fungieren. Dieser Sender 35 wird über einen Regelkreis durch einen Protokollchip 24 gesteuert. Der Modulator 19 moduliert den weitzuleitenden Datenstrom 28 dem abfließenden Energiestrom 27 auf.

Der Energiespeicher 22 ist so ausgebildet, daß er nur eine definierte Maximal-Leistung freisetzen kann. Die optisch zuführbare Leistung ist ebenfalls beschränkt. Hierdurch wird im Fehlerfall nur eine begrenzte Energie freigesetzt.

Die Energiespeicher 22 der einzelnen Busteilnehmer 11 werden in der Initialisierungsphase kaskadenförmig geladen. Die lokalen Energiespeicher 22 ermöglichen somit kurzfristige Leistungsschwankungen auszuregeln. Der Wert des Speicherinhalts wird ständig über den Bus überwacht. Unterschreitet der Energiespeicherinhalt einen kritischen Wert, so wird über einen zur Zeit durchlaufenden Zyklus die Master-Einheit 33 aufgefordert, einen oder mehrere serielle Energiezyklen einzuschieben, bis der Energiespeicher 22 ausreichend gefüllt ist.

Die in jedem Busteilnehmer 11 optisch/elektrisch konvertierte Leistung wird dem Energiespeicher wie auch dem Sender 35 zugeführt. Über einen Regelkreis 24, 23, 21 und 20 wird die Leistungsverteilung zwischen Sender 35 und Energiespeicher 22 so gesteuert, daß die Sendeleistung einen minimalen Wert nicht unterschreitet.

Ferner besteht die Möglichkeit Energie selektiv einzelnen Busteilnehmern zukommen zu lassen. Hierbei wird mit Hilfe eines Bypasses 14, der durch das Bus-Protokoll geschaltet wird, die volle Leistung vom Empfänger 34 zum Sender 35 weitergeleitet, ohne daß der Energiespeicher 22 nachgefüllt wird. Das Bussystem 10 ermöglicht somit neben der bedarfsgerechten seriellen auch eine einem Busteilnehmer 11 zuordenbare Energieverteilung über den Bypass 14.

Trotz der Überwachung des Energieinhaltes über den Bus und des Einbindens von Energiezyklen bleibt das Bussystem 10 unter den Voraussetzungen eines synchronen Betriebes zwischen Steuerung 36 und Master-Einheit 33 regelungsfähig.

Für eine bidirektionale - nicht dargestellte - Daten- und Energieübertragung weisen die Busteilnehmer zwei weitere Sender 35 und Empfänger 34 (Tore) auf. Zur Sicherstellung dieses bidirektionalen, vollduplexen Datenverkehrs sind geeignete Modulationsverfahren anzuwenden, wie z.B. Wellenlängenmulitplex oder auch FSK.

Wie Figur 2 zeigt, besitzt jeder Busteilnehmer 11 mindestens drei Schnittstellen. Hierbei handelt es sich um den ankommenden und abgehenden Bus in Form eines Lichtwellenleiters 12 sowie die Schnittstelle 25 zur E/A-Peripherie.

Während des parallelen Modulationsbetriebs werden im Lichtwellenleiter 12 das Daten- und Energiesignal 17 zeitgleich geführt. Durch ein geeignetes Verfahren werden beide Signale miteinander verknüpft. Ein einfaches Verfahren im NRZ-Format besteht aus einem Engergiesignal mit einem hohem Gleichanteil und aufmodulierten Datensignal.

Der O/E-Konverter 15 ist Bestandteil des Empfängers 34 und detekiert sowohl die optische Leistung als auch das Datensignal. Die Energiekonverter arbeiten vorzugsweise als Photoelement und besitzen einen aktuellen Wirkungsgrad von ca. 50% bei einer Modulationsfähigkeit von 250kHz. Diese Energiekonverter können Leistungen bis 500mW detektieren und sind ausgelegt für das erste optische Fenster (850nm). Der Sender 35 weist vorzugsweise eine entsprechende oben beschriebene 850nm-Halbleiterlaserdiode auf.

Der Demodulator 18 stellt die Energie-/Datenstromtrennung sicher. Dies geschieht vorzugsweise durch eine AC-Entkopplung, wobei der Datenstrom 28 für die weitere Verarbeitung auf ein geeignetes Format, wie z.B. NRZ mit 5VCMOS-Pegel, transformiert wird.

Ein Protokollchip 24 übernimmt alle nötigen Funktionen eines gewöhnlichen Buskontrollchips, insbesondere das Schreiben und Lesen eines E/A-Registers 25, das Aktordaten 38 und Sensordaten 37 aufnimmt. Zusätzlich steuert er die oben erwähnten Abläufe zum Energiezyklus und zur Energiediagnose im Zusammenspiel mit der Master-Einheit 33.

Der Protokollchip 24 regelt weiterhin mit Hilfe eines Reglers 23 und eines Stellglieds 21 die Ladung des Energiespeichers 22 auf Basis von Steuerdaten 30. Dies umfaßt ebenfalls die Steuerung einer Weiche 20 durch die der Bypass 14 aktiviert wird.

Der in jedem Busteilnehmer 11 integrierte Energiespeicher 22 dient für den Portokollchip und entsprechende andere Baugruppen als Spannungsquelle. Kurzzeitige Schwankungen im Leistungsbedarf der aktiven Baugruppen oder der angeschlossenen Peripherie werden über den zulässigen Schwankungsbereich des Speicherinhaltes ausgeregelt. Größerer Energiebedarf wird über das Energiemanagement insbesondere über die Master-Einheit 33 sichergestellt.

### Bezugszeichen

- 10: Bussystem
- 11: Busteilnehmer
- 12: Lichtwellenleiter
- 13: optische Energiequelle
- 14: Bypass
- 15: O/E-Konverter
- 16: E/O-Konverter
- 17: moduliertes optisches Energie- und Datensignal
- 18: Demodulator
- 19: Modulator
- 20: Weiche
- 21: Stellglied
- 22: Energiespeicher
- 23: Regler
- 24: Protokollchip
- 25: E/A-Register
- 26: Energie- und Datenstrom
- 27: Energiestrom
- 28: Datenstrom
- 29: Versorgungsstrom
- 30: Steuerdaten
- 31: Daten-Master
- 32: aktiver Energie-Master
- 32a: passiver Energie-Master
- 33: Master-Einheit
- 34: Empfänger, bestehend aus O/E-Konverter und Demodulator
- 35: Sender, bestehend aus Modulator und E/O-Konverter
- 36: Prozeßsteuerung
- 37: Sensordaten
- 38: Aktordaten
- 39: Datenslave

## Patentansprüche

1. Bussystem (10) mit einer optischen Energiequelle (13) und mit einer Mehr- oder Vielzahl von Busteilnehmern (11), die zur Übertragung von Daten in Form eines aus Lichtsignalen bestehenden Datenstroms (28) mittels eines Lichtwellenleiters (12) miteinander verbunden sind, und deren Energiebedarf über zugeleitete Lichtenergie in Form eines Energiestroms (27) gedeckt wird, wobei die Datenübertragung und die Energieübertragung für die Busteilnehmer (11) über den gemeinsamen Lichtwellenleiter (12) entweder parallel durch Modulation des Datenstroms (28) auf den Energiestrom (27) oder durch zeitlich sequentielle Nacheinandersendung von Datenstrom (28) und Energiestrom (27) erfolgt,
**dadurch gekennzeichnet,**
**daß** jeder Busteilnehmer (11) zur Versorgung seiner einzelnen Komponenten (18 - 25) einen durch den Energiestrom (27) ladbaren Energiespeicher (22) hat, wobei jeder Busteilnehmer (11) einen Regelkreis mit einem Protokollchip (24), einem Regler (23) und einem Stellglied (21) hat, der die Ladung des Energiespeichers (22) regelt sowie die Auswertung und Weiterleitung des Datenstroms (28) vornimmt, und jeder Busteilnehmer (11) ferner einen den Energiespeicher (22) umgehenden Bypass (14) aufweist, der über eine Weiche (20) durch den Protokollchip (24) schaltbar ist.

2. Bussystem nach Anspruch 1,
**dadurch gekennzeichnet,**
**daß** bei der parallelen Energieübertragung durch Modulation die Busteilnehmer (11) einen O/E-Konverter (15) aufweisen, dem ein elektrischer Demodulator (18) zur Trennung des umgewandelten Datenstroms (28) und des umgewandelten Energiestroms (27) nachgeschaltet ist, und die Busteilnehmer (11) ferner einen Modulator (19) haben, der zum Weiterreichen des umgewandelten Datenstroms (27) und des umgewandelten Energiestroms (28) bestimmt und dem ein E/O-Konverter (16) nachgeordnet ist.

3. Bussystem nach Anspruch 1 oder 2,
**dadurch gekennzeichnet,**
**daß** ein Energiemanagementsystem je nach Energiebedarf der Busteilnehmer (11) zwischen paralleler, modulierter und serieller Energieübertragung umschaltet.

4. Bussystem nach einem der Ansprüche 1 bis 3,
**dadurch gekennzeichnet,**
**daß** die Busteilnehmer (11) über den Lichtwellenleiter (12) mit einem Daten-Master (31) zur Erzeugung des Datenstroms (28) und mit mindestens einem Energie-Master (32, 32a) zur Erzeugung des Licht-Energiestroms (27) verbunden sind.

5. Bussystem nach Anspruch 4
**dadurch gekennzeichnet,**
**daß** der Energie-Master (32, 32a) den Energiestrom (27) mit hohem Gleichanteil dem Datenstrom (28) auf dem Lichtwellenleiter (12) unterlagert.

## Claims

1. Bus system (10) comprising an optical energy source (13) and comprising a plurality or multiplicity of bus subscribers (11) which are interconnected by an optical fibre (12), for transmitting data in the form of a data stream (28) consisting of light signals, and of which the energy requirements are met via light energy supplied in the form of an energy flux (27), the data and the energy for the bus subscribers (11) being transmitted via the common optical fibre (12) either in parallel, by modulating the data stream (28) relative to the energy flux (27), or by transmitting the data stream (28) and energy flux (27) in succession in a time sequence,
**characterised in that**
each bus subscriber (11), in order to supply his individual components (18 to 25), has an energy store (22) that may be charged by the energy flux (27), each bus subscriber (11) having a control circuit comprising a protocol chip (24), a controller (23) and an actuator (21), which controls the charging of the energy store (22) and evaluates and forwards the data stream (28), and each bus subscriber (11) also having a bypass (14) that bypasses the energy store (22) and may be switched via a switch (20) by means of the protocol chip (24).

2. Bus system according to claim 1,
**characterised in that**,
in the case of parallel energy transmission by means of modulation, the bus subscribers (11) have an O/E converter (15), connected downstream of which is an electrical demodulator (18) for separating the converted data stream (28) and the converted energy flux (27), and the bus subscribers (11) also have a modulator (19), which is intended for forwarding the converted data stream (27) and the converted energy flux (28) and downstream of which is connected an E/O converter (16).

3. Bus system according to either claim 1 or claim 2,
**characterised in that**
an energy management system switches between parallel, modulated energy transmission and series energy transmission, depending on the energy requirements of the bus subscribers (11).

4. Bus system according to any one of claims 1 to 3,
**characterised in that**
the bus subscribers (11) are connected via the optical fibre (12) to a data master (31), in order to generate the data stream (28), and to at least one energy master (32, 32a), in order to generate the light energy current (27).

5. Bus system according to claim 4,
**characterised in that**
the energy master (32, 32a) underlaps the energy current (27) having the high direct component with the data stream (28) on the optical fibre (12).

## Revendications

1. Système de bus (10) avec une source d'énergie optique (13) et avec plusieurs ou de nombreux souscripteurs de bus (11) qui sont reliés entre eux au moyen d'une fibre optique (12) pour le transfert de données sous la forme d'un flux de données (28) composé de signaux lumineux, et dont la consommation d'énergie est couverte par énergie lumineuse qui est amenée sous la forme d'un flux d'énergie (27), le transfert de données et le transfert d'énergie pour les souscripteurs de bus étant effectués par l'intermédiaire de la fibre optique commune (12), soit parallèlement par modulation du flux de données (28) sur le flux d'énergie (27) ou soit par émission successive séquentielle d'un flux de données (28) et d'un flux d'énergie (27),
**caractérisé en ce que**
chaque souscripteur de bus (11) possède, pour alimenter ses différents composants (18 - 25), un accumulateur d'énergie (22) qui peut être chargé par le flux d'énergie (27), chaque souscripteur de bus (11) ayant un circuit de réglage avec une puce de protocole (24), un régleur (23) et un organe de réglage (21), qui contrôle la charge de l'accumulateur d'énergie et procède aussi à l'évaluation et au transfert ultérieur du flux de données (28), et chaque souscripteur de bus (11) présentant en outre un bypass (14) qui, contournant l'accumulateur d'énergie (22), peut être commuté par la puce de protocole (24), par l'intermédiaire d'un commutateur (20).

2. Système de bus selon la revendication 1,
**caractérisé en ce que**,
lors de la transmission parallèle d'énergie par modulation, le souscripteurs de bus (11) présente un convertisseur opto-électronique (15), en aval duquel un démodulateur électrique (18) est connecté pour la séparation du flux de données (28) converti et du flux d'énergie converti, et que les souscripteurs de bus (11) possèdent, en outre, un modulateur (19) qui est destiné au transfert ultérieur du flux de données (27) converti et du flux d'énergie (28) converti et en aval duquel un convertisseur électro-optique (16) est disposé.

3. Système de bus selon la revendication 1 ou 2,
**caractérisé en ce que**,
selon les besoins d'énergie des souscripteurs de bus (11), un système de gestion d'énergie commute entre transfert d'énergie modulé en parallèle et transfert d'énergie en série.

4. Système de bus selon l'une des revendications 1 à 3,
**caractérisé en ce que**,
les souscripteurs de bus (11) sont reliés par l'intermédiaire de la fibre optique (12) avec un maître de données (32), pour la génération du flux de données (28) et avec au moins un maître d'énergie (32, 32a), pour la génération du flux d'énergie lumineuse (27).

5. Système de bus selon la revendication 4,
**caractérisé en ce que**
le maître d'énergie (32, 32a) rend le flux d'énergie (27), qui présente une forte composante continue, subjacent au flux de données, dans la fibre optique (12).
